(19) Europäisches Patentamt

European Patent Office

Office européen des brevets

(11) **EP 1 256 216 B1**

(12) **EUROPÄISCHE PATENTSCHRIFT**

(45) Veröffentlichungstag und Bekanntmachung des Hinweises auf die Patenterteilung:
**27.04.2005 Patentblatt 2005/17**

(21) Anmeldenummer: **01913663.9**

(22) Anmeldetag: **14.02.2001**

(51) Int Cl.⁷: **H04L 25/02**

(86) Internationale Anmeldenummer:
**PCT/DE2001/000595**

(87) Internationale Veröffentlichungsnummer:
**WO 2001/061949 (23.08.2001 Gazette 2001/34)**

(54) **VERFAHREN ZUR SCHÄTZUNG VON KANALPARAMETERN VON FUNKKANÄLEN EINES W-CDMA-MOBILFUNKSYSTEMS**

METHOD FOR ESTIMATING RADIO CHANNEL PARAMETERS IN A W-CDMA MOBILE RADIO SYSTEM

PROCEDE POUR EVALUER DES PARAMETRES DE CANAUX RADIO DANS UN SYSTEME DE TELEPHONIE MOBILE W-CDMA

(84) Benannte Vertragsstaaten:
**AT BE CH CY DE DK ES FI FR GB GR IE IT LI LU MC NL PT SE TR**

(30) Priorität: **15.02.2000 DE 10006520**

(43) Veröffentlichungstag der Anmeldung:
**13.11.2002 Patentblatt 2002/46**

(73) Patentinhaber: **Infineon Technologies AG**
**81669 München (DE)**

(72) Erfinder:
  • **SCHMIDT, Peter**
    **67167 Erpolzheim (DE)**
  • **PLECHINGER, Jörg**
    **80469 München (DE)**
  • **SCHNEIDER, Michael**
    **81541 München (DE)**
  • **DOETSCH, Markus**
    **CH-3098 Schliern (CH)**
  • **KELLA, Tideya**
    **80337 München (DE)**
  • **JUNG, Peter**
    **67697 Otterberg (DE)**

(74) Vertreter: **Lange, Thomas, Dr. et al**
**Patentanwälte**
**Lambsdorff & Lange**
**Dingolfinger Strasse 6**
**81673 München (DE)**

(56) Entgegenhaltungen:
**EP-A- 0 969 604        WO-A-01/10093**
**DE-A- 19 747 457**

• **LINDOFF B ET AL: "CHANNEL ESTIMATION FOR THE W-CDMA SYSTEM, PERFORMANCE AND ROBUSTNESS ANALYSIS FROM A TERMINAL PERSPECTIVE" CONFERENCE PROCEEDINGS, Bd. 49, 16. - 20. Mai 1999, Seiten 1565-1569, XP000903498 IEEE, NEW YORK, USA ISBN: 0-7803-5566-0**
• **FREY T ET AL: "Investigation of channel estimation for W-CDMA (UMTS FDD-mode)" ITG-FACHBERICHT, 1999, VDE-VERLAG , Nr. 157, 6. - 8. Oktober 1999, Seiten 225-228, XP001002931 Munich, Germany ISSN: 0932-6022**
• **DONG XIAOJIAN ET AL: "A novel method of channel estimation for W-CDMA" FIFTH ASIA-PACIFIC CONFERENCE ON COMMUNICATIONS AND FOURTH OPTOELECTRONICS AND COMMUNICATIONS CONFERENCE, Bd. 1, 18. - 22. Oktober 1999, Seiten 582-585, XP002171416 Beijing Univ. Posts & Telecommun, China**
• **CACOPARDI S ET AL: "Channel estimation and tracking of an indoor orthogonal multicarrier DS-CDMA system using measured channel delay profiles" IEEE 46TH VEHICULAR TECHNOLOGY CONFERENCE. MOBILE TECHNOLOGY FOR THE HUMAN RACE , Bd. 3, 28. April 1996 (1996-04-28) - 1. Mai 1996 (1996-05-01), Seiten 1559-1563, XP002171417 IEEE, New York, NY, USA ISBN: 0-7803-3157-5**

- **SCHMIDL T M ET AL: "THE USE OF ITERATIVE CHANNEL ESTIMATION (ICE) TO IMPROVE LINK MARGIN IN WIDEBAND CDMA SYSTEMS" CONFERENCE PROCEEDINGS, Bd. 49, 16. - 20. Mai 1999, Seiten 1307-1311, XP000903257 IEEE, NEW YORK, US ISBN: 0-7803-5566-0**

**Beschreibung**

Die vorliegende Erfindung betrifft ein Verfahren zur Schätzung von Kanalparametern von Funkkanälen eines W-CDMA-Mobilfunksystems, bei dem von einer Basisstation zwischen unbekannten Datensymbolen Sequenzen von bekannten Symbolen gesendet werden, und die Kanalschätzung durch Vergleich der empfangenen Sequenzen mit den bekannten Symbolen erfolgt.

Die vorliegende Erfindung befaßt sich mit der Problematik der Kanalschätzung in zellularen Mobilfunksystemen mit W-CDMA (wide band code division multiple access = breitbandiges Codevielfachzugriffsverfahren), wie es beispielsweise in der Literatur in P. Jung "Analyse und Entwurf digitaler Mobilfunksysteme", B.G. Täubner Verlag, Stuttgart, 1997 und in der Zeitschrift IEEE Transaction on vehicular technology, Band 47, Nr. 4 vom November 1998 in dem Artikel "W-CDMA- The radio interface for future mobile multi media communication" ausführlich beschrieben ist. Dieses Verfahren ist von erheblicher Bedeutung, denn es soll den weltweiten Standard für die Mobilfunktechnik der dritten Generation bilden, wie dies in IEEE Transactions on vehicular technology, Band 47, Nr. 4 vom November 1998 in dem Artikel "UMTS Universal mobile telecommunication systems: Development of standards for the third generation" erläutert ist.

Bei Mobilfunksystemen ist stets die Problematik zu berücksichtigen, daß sich durch die Bewegung des mobilen Empfängers die Eigenschaften der Übertragungskanäle ständig ändern. Um eine gute Detektion der übertragenen Signale sicherzustellen, ist es daher von herausragender Bedeutung, daß der jeweilige Empfänger über möglichst gute Hypothesen hinsichtlich der momentanen Kanalparameter verfügt.

Zu diesem Zweck sollen in dem künftigen UMTS-Standard für Mobilfunksysteme verschiedene physikalische Kanäle zur Kanalschätzung systemseitig vorgesehen sein. Zum einen wird von einer Basisstation zu einem bestimmten Teilnehmer eine Sequenz von dem Teilnehmer bekannten Symbolen, den sogenannten dedizierten Pilotsymbolen, gesendet. Zum anderen sendet die Basisstation auf einem gemeinsamen Kanal, dem sogenannten common pilot channel, im Dauerbetrieb für alle Teilnehmer eine diesen bekannte Sequenz von Pilotsymbolen.

Den hierzu nächstgelegenen Stand der Technik stellt das heute verfügbare Mobilfunksystem ANSI-95 aus den USA dar. Dieses verwendet jedoch ausschließlich die Schätzung der Kanalparameter mit Hilfe des gemeinsamen Kanals und der auf diesem ausgestrahlten, allen Teilnehmern bekannten Signalen, den common pilot signals. Das ANSI-95 System verwendet dazu Algorithmen, aus dem Stand der Technik die auf der Kanalschätzung mit Hilfe der Integration über diese Pilotsignale basieren.

Dies hat jedoch den Nachteil, daß die für den gemeinsamen Kanal verwendete Sendeleistung und der Spreizungsfaktor nicht unbedingt auch für den Kanal zutreffend sind, den der spezifische Teilnehmer benutzt. Je größer der Leistungsunterschied bzw. der Unterschied der Spreizungsfaktoren ist, mit denen die verschiedenen Kanäle übertragen werden, um so größer ist der systematische Fehler bei der Bestimmung der Kanalparameter für den Kanal des einzelnen Teilnehmers durch einfache Übernahme der Kanalparameter des gemeinsamen Kanals.

Es ist daher Aufgabe der Erfindung, ein Verfahren anzugeben, mit dem die Schätzung der Kanalparameter für die teilnehmerspezifischen Kanäle erheblich verbessert werden kann.

Die der Erfindung zugrunde liegende Aufgabe wird durch die Merkmale des Anspruchs 1 gelöst.

Die Erfindung geht davon aus, dass eine Basisstation im Dauerbetrieb für alle Teilnehmer eine Sequenz von ersten bekannten Symbolen auf einem gemeinsamen Kanal ausstrahlt und zusätzlich auf einem oder mehreren teilnehmerspezifischen Kanälen zwischen unbekannten Datensymbolen Sequenzen von zweiten bekannten Symbolen (dedizierte Pilotsymbole) gesendet werden. Die Schätzung erster Kanalparameter des gemeinsamen Kanals erfolgt anhand der auf diesem im Dauerbetrieb gesendeten ersten bekannten Symbolen. Die Schätzung zweiter Kanalparameter erfolgt für den oder die teilnehmerspezifischen Kanäle anhand der auf diesen gesendeten zweiten bekannten Symbole. Die Schätzung zweiten Kanalparameter für den oder die teilnehmerspezifischen Kanäle zwischen den Ausstrahlungen der zweiten bekannten Symbole auf den teilnehmerspezifischen Kanälen erfolgt anhand der Veränderung der geschätzten ersten Kanalparameter, deren Änderung auf eine entsprechende Änderung der zweiten Parameter der teilnehmerspezifischen Kanäle umgerechnet wird. Auf diese Weise kann auch sehr schnellen Änderungen der Kanalstruktur Folge geleistet werden, ohne daß zuviel Sendezeit für Nutzdaten für die Übertragung bekannter Symbole zur Schätzung der teilnehmerspezifischen Kanäle verbraucht wird.

Erfindungsgemäß erfolgt die Nachführung der geschätzten zweiten Kanalparameter für den oder die teilnehmerspezifischen Kanäle vorzugsweise nach folgender Formel:

$$\hat{\underline{h}}^{d}_{n+1} = \hat{\underline{h}}^{d}_{n} + k \cdot \Delta\, \hat{\underline{h}}^{p}_{n+1},$$

wobei $\hat{\underline{h}}^{d}_{n}$ die Schätzung der Kanalimpulsantwort des jeweiligen teilnehmerspezifischen Kanals zum Zeitpunkt n und $\Delta\underline{h}^{p}_{n+1}$ die Änderung der Schätzung der Kanalimpulsantwort des gemeinsamen Kanals zwischen den Zeitpunkten n und n+1 sowie k einen einstellbaren Korrekturfaktor darstellt.

Alternativ erfolgt die Nachführung der geschätzten zweiten Kanalparameter für den oder die teilnehmerspezifischen Kanäle vorzugsweise nach folgender Formel:

$$\hat{\underline{h}}^d_{n+1} = \hat{\underline{h}}^d_n + \frac{(\Delta\hat{\underline{h}}^d + k \cdot \Delta\hat{\underline{h}}^p_{n+1})}{2},$$

wobei $\hat{\underline{h}}^d_n$ die Schätzung der Kanalimpulsantwort des jeweiligen teilnehmerspezifischen Kanals zum Zeitpunkt n, $\Delta\underline{h}^p_{n+1}$ die Änderung der Schätzung der Kanalimpulsantwort des gemeinsamen Kanals zwischen den Zeitpunkten n und n+1, k einen einstellbaren Korrekturfaktor und $\Delta\underline{h}^d$ einen Korrekturfaktor, der empirisch ermittelt werden kann, darstellen.

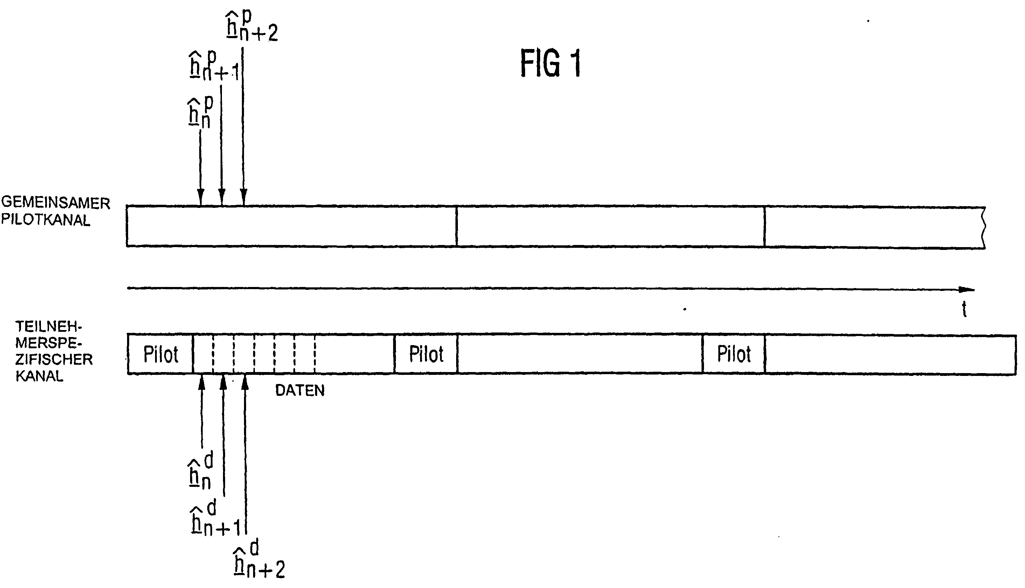

Die vorliegende Erfindung wird im folgenden anhand des mit Hilfe der Zeichnung dargestellten Ausführungsbeispiels näher erläutert. Dabei zeigt Figur 1 die Struktur des gemeinsamen und des teilnehmerspezifischen Kanals, welche jeweils über die gleiche Zeitachse aufgetragen sind.

In dem beschriebenen Ausführungsbeispiel der Erfindung geht es um die Kanalschätzung im Mobilfunksystem UMTS. Bei diesem Mobilfunksystem sind von der Systemseite aus verschiedene physikalische Kanäle zur Kanalschätzung vorgesehen. Zum einen wird von einer Basisstation zu einem bestimmten Teilnehmer eine Sequenz von dem Teilnehmer bekannten Symbolen, den dedizierten Pilotsymbolen, auf dem teilnehmerspezifischen Kanal gesendet. Zum anderen sendet die Basisstation auf dem gemeinsamen Kanal (common pilot channel) im Dauerbetrieb für alle Teilnehmer eine diesen bekannte Sequenz von Pilotsymbolen.

Die vorliegende Erfindung schlägt ein Verfahren der Kanalschätzung vor, welches sowohl auf den dedizierten Pilotsymbolen in den teilnehmerspezifischen Kanälen als auch auf den allgemeinen Pilotsymbolen beruht.

Gemäß dem bekannten Stand der Technik, den das heute verfügbare Mobilfunksystem ANSI 95 (USA) darstellt, ist lediglich eine Schätzung der Kanalparameter mit Hilfe des gemeinsamen Kanals möglich. Hierfür werden derzeit Algorithmen verwendet, die auf der Kanalschätzung mit Hilfe der Integration über die Pilotsignale basieren.

In dem UMTS-System stehen jedoch neben den dauernd gesendeten Pilotsymbolen auf dem gemeinsamen Kanal auch Pilotsymbole in jedem teilnehmerspezifischen Kanal zur verfügung. Sofern die Leistung oder die Spreizungsfaktoren der teilnehmerspezifischen Kanäle und des gemeinsamen Kanals relativ weit auseinanderliegen, lassen sich die anhand des gemeinsamen Kanals ermittelten Parameter für die Kanalschätzung nicht mehr ohne weiteres auf den teilnehmerspezifischen Kanal übertragen. Es verbleibt ein Fehler bei der Schätzung der Kanalparameter, durch den die Qualität der Detektion der teilnehmerspezifischen Signale schlechter wird. Die vorliegende Erfindung hat es sich zur Aufgabe gemacht, diese Kanalschätzung erheblich zu verbessern.

Bei einem erfindungsgemäßen Mobilfunkempfänger erfolgt die Schätzung der Kanalparameter firmwaremäßig in einem digitalen Signalprozessor. Alle entspreizten Symbole jedes RAKE-Fingers des Empfängers können über einen Daten-Bus an den digitalen Signalprozessor übertragen werden. Anhand der einzelnen Symbole jedes RAKE-Fingers kann die Amplitude und die Phasenlage des entsprechenden einzelnen Pfades des Kanals geschätzt werden.

Die Schätzung der Kanalparameter beruht immer darauf, daß von den Basisstationen bekannte Symbole übertragen werden, und diese vom mobilen Empfänger mit den tatsächlich empfangenen Symbolen verglichen werden. Auf diese Weise läßt sich eine Hypothese für die Übertragungscharakteristik des Kanals bestimmen. Die entsprechenden Kanalparameter werden durch Integration über eine Serie bekannter Symbole erhalten.

Während des Zeitraums, in dem Pilotsymbole empfangen werden, kann der Kanal durch Auswertung des nach der Entwürfelung und Entspreizung erhaltenen empfangenen Abbildes der bekannten Pilotsymbolfolge abgeschätzt werden. Diese Abschätzung erfolgt anhand des Integrationsergebnisses entweder über einen Teil oder über das gesamte Abbild der gesendeten bekannten Pilotsymbolfolge. Dies bedeutet, daß das empfangene Signal mittels eines RAKE-Empfängers (jeweils einzeln in den RAKE-Fingern) entspreizt und entzerrt und die Wirkung des Rauschens durch Integration über die empfangenen Pilotsymbole reduziert wird. So ergibt sich beispielsweise als Kanalschätzung für den 1-ten Finger des RAKE-Empfängers folgende Formel:

$$h^r_l = \frac{1}{N_{Pilot}} \cdot \sum_{k=0}^{N_{Pilot}-1} \frac{p_k^r \cdot d_{l;k}^r + p_k^i \cdot d_{l;k}^i}{(p_k^r)^2 + (p_k^i)^2}$$

$$h^i{}_l = \frac{1}{N_{Pilot}} \cdot \sum_{k=0}^{N_{Pilot}-1} \frac{p_k{}^r \cdot d^i_{l;k} - p_k{}^i \cdot d^r_{l;k}}{(p_k{}^r)^2 + (p_k{}^i)^2}$$

wobei $h^r{}_l$ der Realteil und $h^i{}_l$ der Imaginärteil der Kanalschätzung für den 1-ten Pfad ist, $N_{pilot}$ die Zahl der zu vergleichenden Pilotsymbole und $d_{l;k}$ das empfangene Signal aus dem 1-ten Pfad und $p_k$ das bekannte Pilotsymbol ist.

Dergestalt erhält man eine geschätzte Kanalgewichtung für jeden Finger. Die geschätzte Kanalgewichtung dient der Kombination der Maximalverhältnisse, die wiederum hardwaremässig erfolgt.

Bei sich schnell ändernden Kanälen und niedrigen Datenraten, wie sie beispielsweise bei hohen Bewegungsgeschwindigkeiten auftreten, ändert sich die Kanalimpulsantwort sehr schnell und damit kann die aktuelle Kanalimpulsantwort, welche die Symbole am Ende eines Zeitschlitzes betrifft, erheblich von der geschätzten Kanalimpulsantwort abweichen. Um diesen systematischen Schätzfehler zu verringern, wird erfindungsgemäß vorgeschlagen, diese Änderungen der Kanalimpulsantwort zwischen zwei aufeinanderfolgenden Folgen von bekannten Symbolen nachzuführen.

Ergänzend sei noch darauf hingewiesen, daß sich natürlich auch herkömmliche Verfahren der Prädiktion für die Kanalschätzung im Mobilfunk einsetzen lassen. Diese haben jedoch den Nachteil, daß mit zunehmender Filterlänge der Signalverarbeitungsaufwand extrem ansteigt.

Da bei dem zur Zeit in der Standardisierung befindlichen Mobilfunksystem UMTS sowohl dedizierte als auch allgemeine Pilotsignale verwendet werden, schlägt die vorliegende Erfindung eine Kombination der Auswertung beider Signale zur Verbesserung der Kanalschätzung vor. Dadurch wird ein besseres Empfangsverhalten des mobilen Empfängers erzielt. Da das allgemeine Pilotsignal (common pilot channel) während der Dauer eines Zeitschlitzes kontinuierlich gesendet wird, läßt es sich besonders gut zur Ermittlung einer zeitlich aktuellen Kanalimpulsantwort verwenden. Da jedoch das allgemeine Pilotsignal von der Basisstation mit einer anderen Leistung abgestrahlt wird, als das teilnehmerspezifische Signal, ist die so ermittelte zeitlich aktuelle Kanalimpulsantwort gegenüber der tatsächlichen zeitlich aktuellen Kanalimpulsantwort für den teilnehmerspezifischen Kanal fehlerbehaftet. Besonders gute Ergebnisse lassen sich daher nur erreichen, wenn die Information hinsichtlich der Kanalparameter aus geeigneten Signalen in geeigneter Form kombiniert wird.

Dies wird im folgenden anhand der Figur 1 näher erläutert. Figur 1 zeigt den gemeinsamen Kanal (common pilot channel), auf dem von der Basisstation kontinuierlich Sequenzen bekannter Signale für alle Teilnehmer gesendet werden und einen teilnehmerspezifischen Kanal (dedicated channel), in dem abwechselnd Folgen von bekannten Symbolen (Pilotfolgen) und Folgen unbekannter Symbole (Daten) übertragen werden. Beide Kanäle sind über die gleiche Zeitachse t aufgetragen, und weisen in diesem Beispiel den gleichen Spreizfaktor auf.

Erfindungsgemäß kann nun folgendermaßen vorgegangen werden: Am Ende der Übertragung einer Folge bekannter Symbole (Pilotsequenz) auf dem teilnehmerspezifischen Kanal ist die aktuelle Kanalimpulsantwort dieses teilnehmerspezifischen Kanals bekannt. Sie werde mit $\underline{h}^d_n$ bezeichnet, da der Zeitpunkt der Übertragung des ersten datentragenden Symbols (unbekannten Symbols) nach den Pilotsymbolen als "n" bezeichnet werde. Gleichzeitig sind die Kanalimpulsantworten des gemeinsamen Kanals (common pilot channel) zu jedem Zeitpunkt n, n+1 ... bekannt, da auf diesem Kanal lediglich bekannte Symbole ausgestrahlt werden. Die entsprechenden Kanalimpulsantworten werden mit $\underline{h}^p_n$, $\underline{h}^p_{n+1}$ usw. bezeichnet.

Erfindungsgemäß kann aus diesen Informationen nach einer der folgenden Formeln iterativ die Kanalschätzung für den teilnehmerspezifischen Kanal $\underline{h}^d_{n+1}$ zum Zeitpunkt n+1 berechnet werden, wobei zur Vereinfachung der Darstellung der Formeln davon ausgegangen wird, daß der datentragende Kanal und der gemeinsame Pilotkanal den gleichen Spreizfaktor haben. Selbstverständlich kann die Kanalschätzung für unterschiedliche Spreizfaktoren in ähnlicher Weise vorgenommen werden. Lediglich die Indizierung der Formeln ist dann entsprechend anzupassen:

$$\hat{\underline{h}}^d_{n+1} = \hat{\underline{h}}^d_n + k \cdot (\hat{\underline{h}}^p_{n+1} - \hat{\underline{h}}^p_n).$$

Der Faktor *k* wird dabei als Leistungskorrekturfaktor bezeichnet und gibt an, wie stark aufgrund der unterschiedlichen Sendeleistungen eine Veränderung der Kanalparameter des gemeinsamen Kanals auf dem teilnehmerspezifischen Kanal durchschlägt.

Zum Zwecke einer noch genaueren Annäherung der Schätzung der Kanalimpulsantwort des teilnehmerspezifischen Kanals zum Zeitpunkt n+1 wird erfindungsgemäß die folgende Formel vorgeschlagen:

$$\hat{\underline{h}}^d_{n+1} = \hat{\underline{h}}^d_n + \frac{(\Delta \hat{\underline{h}}^d + k \cdot (h^p_{n+1} - h^p_n))}{2}$$

$\Delta \hat{\underline{h}}^d$ stellt dabei einen Korrekturfaktor dar, der beispielsweise empirisch ermittelt werden kann.

## Patentansprüche

**1.** Verfahren zur Schätzung von Kanalparametern von Funkkanälen eines W-CDMA-Mobilfunksystems,

- bei dem von einer Basisstation im Dauerbetrieb für alle Teilnehmer eine Sequenz von ersten bekannten Symbolen auf einem gemeinsamen Kanal gesendet wird,
- zusätzlich auf einem oder mehreren teilnehmerspezifischen Kanälen zwischen unbekannten Datensymbolen Sequenzen von zweiten bekannten Symbolen gesendet werden,
- eine Schätzung von Kanalparametern durch Vergleich empfangener Sequenzen von bekannten Symbolen mit den entsprechenden bekannten Symbolen erfolgt,
- die Schätzung erster Kanalparameter des gemeinsamen Kanals anhand der auf diesem im Dauerbetrieb gesendeten ersten bekannten Symbolen erfolgt, und
- die Schätzung zweiter Kanalparameter für den oder die teilnehmerspezifischen Kanäle anhand der auf diesen gesendeten zweiten bekannten Symbolen erfolgt,
- wobei die Schätzung der zweiten Kanalparameter für den oder die teilnehmerspezifischen Kanäle zwischen den Ausstrahlungen der zweiten bekannten Symbole auf dem oder den teilnehmerspezifischen Kanälen anhand der Veränderung der geschätzten ersten Kanalparameter nachgeführt wird.

**2.** Verfahren nach Anspruch 1,
bei dem die Nachführung der geschätzten zweiten Kanalparameter für den oder die teilnehmerspezifischen Kanäle nach folgender Formel erfolgt:

$$\hat{\underline{h}}^d_{n+1} = \hat{\underline{h}}^d_n + k \cdot \Delta \hat{\underline{h}}^p_{n+1},$$

wobei

- $\hat{\underline{h}}^d_n$ die Schätzung der Kanalimpulsantwort des jeweiligen teilnehmerspezifischen Kanals zum Zeitpunkt n,
- $\Delta \underline{h}^p_{n+1}$ die Änderung der Schätzung der Kanalimpulsantwort des gemeinsamen Kanals zwischen den Zeitpunkten n und n+1 und
- k einen einstellbaren Korrekturfaktor

darstellen, und
sich die vorliegende Indizierung auf den Fall bezieht, bei dem der jeweilige teilnehmerspezifische Kanal und der gemeinsame Kanal den gleichen Spreizfaktor haben, so dass bei unterschiedlichen Spreizfaktoren die Indizierung entsprechend dem Verhältnis der Spreizfaktoren umzurechnen ist.

**3.** Verfahren nach Anspruch 1,
bei dem die Nachführung der geschätzten zweiten Kanalparameter für den oder die teilnehmerspezifischen Kanäle nach folgender Formel erfolgt:

$$\hat{\underline{h}}^d_{n+1} = \hat{\underline{h}}^d_n + \frac{(\Delta \hat{\underline{h}}^d + k \cdot \Delta \hat{\underline{h}}^p_{n+1})}{2},$$

wobei

- $\hat{\underline{h}}^d_n$ die Schätzung der Kanalimpulsantwort des jeweiligen teilnehmerspezifischen Kanals zum Zeitpunkt n,
- $\Delta \underline{h}^p_{n+1}$ die Änderung der Schätzung der Kanalimpulsantwort des gemeinsamen Kanals zwischen den Zeitpunkten n und n+1,
- k einen einstellbaren Korrekturfaktor und

- $\Delta \hat{\underline{h}}^d$ einen Korrekturfaktor, der empirisch ermittelt werden kann,

darstellen, und

sich die vorliegende Indizierung auf den Fall bezieht, bei dem der jeweilige teilnehmerspezifische Kanal und der gemeinsame Kanal den gleichen Spreizfaktor haben, so dass bei unterschiedlichen Spreizfaktoren die Indizierung entsprechend dem Verhältnis der Spreizfaktoren umzurechnen ist.

**Claims**

1. Method for estimating channel parameters of radio channels of a W-CDMA mobile radio system

   - in which a sequence of first known symbols is transmitted on a common channel by a base station in continuous operation for all the subscribers,
   - in addition sequences of second known symbols are transmitted between unknown data symbols on one or more subscriber-specific channels,
   - an estimation of channel parameters is carried out by comparison of received sequences of known symbols with the corresponding second known symbols,
   - the estimation of first channel parameters of the common channel is carried out by reference to the first known symbols transmitted on the latter in continuous operation, and
   - the estimation of second channel parameters for the subscriber-specific channel or channels is carried out by reference to the second known symbols transmitted on the latter,
   - the estimation of the second channel parameters for the subscriber-specific channel or channels being corrected between the emissions of the second known symbols on the subscriber-specific channels by reference to the change in the estimated first channel parameters.

2. Method according to Claim 1, in which the correction of the estimated second channel parameters for the subscriber-specific channel or channels is carried out according to the following formula:

$$\hat{\underline{h}}^d_{n+1} = \hat{\underline{h}}^d_n + k \cdot \Delta \hat{\underline{h}}^p_{n+1},$$

   - $\hat{\underline{h}}^d_n$ representing the estimation of the channel pulse response of the respective subscriber-specific channel at the time n,
   - $\Delta \underline{h}^p_{n+1}$ representing the change in the estimation of the channel pulse response of the common channel between the times n and n+1, and
   - k representing an adjustable correction factor, and

   the present indexing relating to the case in which the respective subscriber-specific channel and the common channel have the same spread factor, so that when there are different spread factors the indexing to be converted in accordance with the ratio of the spread factors.

3. Method according to Claim 1, in which the correction of the estimated second channel parameters for the subscriber-specific channel or channels is carried out according to the following formula:

$$\hat{\underline{h}}^d_{n+1} = \hat{\underline{h}}^d_n + \frac{(\Delta \hat{\underline{h}}^d + k \cdot \Delta \hat{\underline{h}}^p_{n+1})}{2},$$

   - $\hat{\underline{h}}^d_n$ representing the estimation of the channel pulse response of the respective subscriber-specific channel at the time n,
   - $\Delta \underline{h}^p_{n+1}$ representing the change in the estimation of the channel pulse response of the common channel between the times n and n+1,
   - k representing an adjustable correction factor, and
   - $\Delta \underline{h}^d$ representing a correction factor which can be determined empirically, and

   the present indexing relating to the case in which the respective subscriber-specific channel and the common channel have the same spread factor, so that when there are different spread factors the indexing to be converted in accordance with the ratio of the spread factors.

**Revendications**

1.  Procédé d'évaluation de paramètres de canaux radio d'un système de radiocommunication mobile W-CDMA,

    -   dans lequel on envoie d'une station de base en service continu pour tous les abonnés, une séquence de premiers symboles connus sur un canal commun,
    -   on envoie en outre sur un ou sur plusieurs canaux spécifiques aux abonnés, entre des symboles de données inconnus, des séquences de deuxièmes symboles connus,
    -   on effectue une évaluation de paramètres de canaux en comparant des séquences reçues de symboles connus aux symboles connus correspondants,
    -   on effectue l'évaluation de premiers paramètres du canal commun au moyen des premiers symboles connus envoyés sur celui-ci en service continu,
    -   on effectue l'évaluation de deuxièmes paramètres pour le ou les canaux spécifiques aux abonnés au moyen des deuxièmes symboles connus qui y sont envoyés,
    -   l'évaluation des deuxièmes paramètres pour le ou les canaux spécifiques aux abonnées entre les émissions des deuxièmes symboles connus sur le ou les canaux spécifiques aux abonnés étant suivie au moyen de la variation des premiers paramètres de canal, qui ont été évalués.

2.  Procédé suivant la revendication 1, dans lequel on effectue le suivi des deuxièmes paramètres qui ont été évalués pour le ou les canaux spécifiques aux abonnés par la formule suivante

$$\underline{\hat{h}}^d_{n+1} = \underline{\hat{h}}^d_n + k \cdot \Delta \underline{\hat{h}}^p_{n+1},$$

    dans laquelle

    -   $\underline{\hat{h}}^d_n$ est l'évaluation de la réponse impulsionnelle du canal respectif spécifique aux abonnés à l'instant n,
    -   $\Delta \underline{\hat{h}}^p_{n+1}$ est la variation de l'évaluation de la réponse impulsionnelle du canal commun entre les instants n et n + 1, et

    -   k est un facteur de correction réglable et

    l'indice présent se rapporte au cas dans lequel le canal spécifique à l'abonné respectif et le canal commun ont le même facteur d'étalement de sorte que pour des facteurs d'étalement différents, il faut recalculer l'indexation de manière correspondante au rapport des facteurs d'étalement.

3.  Procédé suivant la revendication 1, dans lequel on effectue le suivi du deuxième paramètre qui a été évalué pour le ou les canaux spécifiques aux abonnés par la formule suivante

$$\underline{\hat{h}}^d_{n+1} = \underline{\hat{h}}^d_n + \frac{(\Delta \underline{\hat{h}}^d + k \cdot \Delta \underline{\hat{h}}^p_{n+1})}{2},$$

    -   $\underline{\hat{h}}^d_n$ est l'évaluation de la réponse impulsionnelle du canal respectif spécifique aux abonnés à l'instant n,
    -   $\Delta \underline{\hat{h}}^p_{n+1}$ est la variation de l'évaluation de la réponse impulsionnelle du canal commun entre les instants n et n + 1, et

    -   k est un facteur de correction réglable et

    -   $\Delta \hat{h}^d$ est un facteur de correction qui peut être déterminé empiriquement et

    l'indice présent se rapporte au cas dans lequel le canal spécifique à l'abonné respectif et le canal commun ont le même facteur d'étalement de sorte que , pour des facteurs d'étalement différents, il faut recalculer l'indexation de manière correspondante au rapport des facteurs d'étalement.

EP 1 256 216 B1

## FIG 1

$$\hat{\underline{h}}_{n+2}^{p}$$

$$\hat{\underline{h}}_{n+1}^{p}$$

$$\hat{\underline{h}}_{n}^{p}$$

GEMEINSAMER
PILOTKANAL

$t$

TEILNEH-
MERSPE-
ZIFISCHER
KANAL

| Pilot | | | | | Pilot | | Pilot | |

DATEN

$$\hat{\underline{h}}_{n}^{d}$$

$$\hat{\underline{h}}_{n+1}^{d}$$

$$\hat{\underline{h}}_{n+2}^{d}$$